(19) Europäisches Patentamt / European Patent Office / Office européen des brevets

(11) **EP 2 006 367 B1**

(12) **EUROPEAN PATENT SPECIFICATION**

(45) Date of publication and mention
of the grant of the patent:
**30.04.2014 Bulletin 2014/18**

(21) Application number: **07110401.2**

(22) Date of filing: **15.06.2007**

(51) Int Cl.:
$C12H\ 1/02$ (2006.01)   $B01D\ 37/02$ (2006.01)
$B01D\ 37/03$ (2006.01)   $B01J\ 20/28$ (2006.01)
$B01J\ 20/10$ (2006.01)   $B01J\ 20/12$ (2006.01)
$B01J\ 20/32$ (2006.01)   $C02F\ 1/52$ (2006.01)

(54) **Filtering and/or flocculating aids for the purification of liquid foods**

Hilfsmittel zur Filterung und/oder Flockung für die Reinigung flüssiger Nahrungsmittel

Filtrage et/ou procédé de floculation pour la purification d'aliments liquides

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**24.12.2008 Bulletin 2008/52**

(73) Proprietor: **Mondo Minerals B.V.
1041 AR Amsterdam (NL)**

(72) Inventors:
• **Schoelkopf, Joachim
8956, Killwangen (CH)**

• **Gane, Patrick A.C.
4852, Rothrist (CH)**
• **Wenk, Armelle
5400, Baden (CH)**

(74) Representative: **van Kooij, Adriaan et al
Arnold & Siedsma
Sweelinckplein 1
2517 GK Den Haag (NL)**

(56) References cited:
EP-B- 0 031 522      WO-A-2006/082323
DE-A1- 19 516 253    JP-A- 60 139 336
US-A- 3 676 367      US-A- 4 766 000

**Description**

The present invention is directed to new filtering and/or flocculating aids for the purification of liquid foods, as well as a method for their preparation, the use of the improved filtering and/or flocculating aids, a filter cake used for the purification of liquid foods.

Impurities differ in chemical composition relative to the product that contains them. They may be either naturally occurring or added, intentionally or unintentionally, during the manufacture of a product.

When present in a liquid, impurities can affect the liquid's properties or other aspects. They have been observed to alter sensory characteristics, such as by inducing turbidity, discoloration or a change in taste, or even to impart toxicity to the liquid. Such impurities may be organic or inorganic in nature, and include dust, microbes, yeasts, preservatives, colorants and other known impurities.

Impurities are generally removed from liquids by physical means. One approach involves a liquid decantation, which is based on the principle that insoluble elements featuring a density superior to that of their liquid environment will tend to collect at the base of the decantation vessel by gravity. In order to increase the speed of this relatively slow process, a coagulating additive "flocculating aid" may be introduced to the liquid in order to flocculate all or part of the impurities, thereby forming a filter cake consisting of the aid and collected impurities at the base of the decantation vessel. To this end, WO 03/024567 cites the use of mineral compounds, such as amorphous silicon dioxide gels, bentonites or other swellable clays, or organic compounds, such as proteins, isinglass, gelatines, caseins or other materials capable of flocculating impurities on contact in order to sediment these impurities. Once sedimentation is judged sufficiently complete, the purified liquid phase is drawn off from the filter cake.

A second technique consists of centrifuging the liquid to be purified in order to accelerate the impurities towards and concentrate the impurities along the centrifuge walls.

A third approach involves passing the liquid to be purified through a permeable filter capable of retaining, via size exclusion, the impurities on the filter surface as the liquid is passed through its pores by gravity and/or under vacuum and/or under pressure. This process is called "surface filtration". Surface filters may, for example, be metallic or textile in nature. In such a filtration, particles retained are those larger than the filter pores.

Surface filters have the disadvantage of a low dirt holding capacity (grams of dirt retained per unit area of the filter medium). Further, not all particles with a diameter less than that of the filter pore will necessarily pass through the filter, and those remaining in the pore risk blocking the liquid flow.

In another technique known as depth filtration, a filtering aid consisting of a number of tortuous passages of varying diameter and configuration retains impurities by molecular and/or electrical forces adsorbing the particles onto the filter material, and/or by size exclusion, retaining the particles if they are too large to pass through the entire filter layer thickness.

Depth filtration has a high dirt holding capacity, since the depth filter can retain particles throughout its matrix, rather than solely on its surface. Further, owing to the adsorption phenomena taking place within this medium, such a filter can retain particles smaller than its flow passages.

The techniques of depth filtration and surface filtration may additionally be combined by locating the depth filtration layer on the surface filter; this configuration presents the advantage that those particles that might otherwise block the surface filter pores are retained in the depth filtration layer.

One option to introduce a depth filtration layer onto the surface filter is to suspend a flocculating aid in me liquid to be filtered, allowing this aid to subsequently settle such that it flocculates all or part of the impurities as it is deposited on a surface filter, thereby forming the depth filtration layer. This is known as an alluvium filtration system. Optionally, an initial layer of filtration material may be applied by coating or deposition on the surface filter prior to commencing alluvium filtration.

In this context, the skilled man knows FR 2 689 903, wherein white wines stained by black grapes are decolorized by filtration using activated carbon and diatomaceous earth. The filtration is performed by linking a vessel of wine to an empty vessel of similar capacity, and locating a plate filter between the openings of these vessels. A precoat of diatomaceous earth, which is also referred to as diatomite or Kieselguhr, and which is a very light material consisting of skeletons of fossil siliceous algae called diatoms, and cellulose, or cellulose alone, is applied to the plate filter, followed by a filter cake of diatomaceous earth and activated carbon. A separate volume of wine is mixed with a quantity of Kieselguhr (diatomaceous earth) and activated carbon, and this volume is then dosed into a main volume of wine as it flows from the first vessel to the second, upstream relative to the filter. However, as indicated in later WO 03/024567, one of the disadvantages of this technology is that the filtering media risk retaining a significant amount of wine.

Furthermore, despite being a highly adsorptive material with a high surface area, diatomaceous earth, which is also referred to as diatomite or Kieselguhr, and which is a very light material consisting of skeletons of fossil siliceous algae called diatoms, in its calcined form may contain crystalline silica fibres in the form of cristobalite, which are suspected to be carcinogenic.

An alternative to Kieselguhr is proposed in EP 0 255 696, which discloses a filtration process, particularly for beer, that makes use of a filter material that can be chemically regenerated, and which is preferably powdered alumina. It is disclosed therein that this alumina preferably features a specific surface area of from 0.7 to 1.2 $m^2$/g. Later WO 03/024567 indicates however that such alumina generally features an unacceptably high density, an unacceptably low specific surface area, an inappropriate particle size distribution and an unacceptably low porosity relative to Kieselguhr for alluvium filtration applications.

WO 03/024567 relates to a powder composition for alimentary liquid filtration, their regeneration following a cycle of use in filtration, and their recycling. Such powders are described as being appropriate for an alluvium filtration, as featuring an appropriate density, as leading to an improved filtration performance and minimal retention of filtration liquid, and as compatible with diverse beverage liquids. This composition is identified as one that is at least 75% by weight of a high specific surface area alumina, namely of BET specific surface area greater than or equal to 135 $m^2$/g, in combination with less than 25% by weight of an additional filtering material, such as cellulose powders or fibres, certain polymer powders or fibres, glass beads, amorphous silicon dioxide, volcanic ash, non-swellable clays, perlite, low specific surface area alumina, or alumina fibres. It is indicated that the additional filtering material should feature a particle size distribution or shape factor that is "compatible" with the inventive alumina, without providing any additional indication regarding the characteristics of compatibility. The particle size of the alumina particles is mentioned to be useful in a range of 1 to 300 $\mu$m. It is however stated that particles below 10 $\mu$m might have to be separated as they tend to clog the pores of the filter.

Further materials for the purification of liquids were examined, one of which is talc due to its high adsorptivity. Talc is a common magnesium silicate mineral having the chemical formula $Mg_3Si_4O_{10}(OH)_2$. It occurs naturally with varying proportions of associated minerals such as alpha-quartz, calcite, chlorite, dolomite, magnesite and phlogopite as foliated masses having an extraordinary basal cleavage, the resulting folia being non-elastic, although slightly flexible. It is sectile and very soft, with a hardness of 1, thus being the softest of the Mohs' scale of mineral hardness.

Due to its hydrophobic character and very good adsorption properties regarding organic substances, talc is very useful in several applications, e.g. for use in filtration and/or flocculation given its environmental inertness and low associated costs.

In general, it is especially advantageous for adsorbing agents used in a filtration process to feature a high aspect ratio, which is e.g. the case, when they have a platelet-like shape and a high specific surface area, which ensures good adsorption characteristics of such materials. For example, an important advantage of talc in adsorption applications is the sandwich structure of talc, which upon delamination provides a large active surface area. The thickness of one single "sandwich" of octahedral magnesium oxygen/hydroxyl layer between two tetrahedral silicon-oxygen layers is about 1 nm. Untreated individual talc particles usually contain several hundreds of such sandwiches. The size of such multi-sandwich particles can be over 100 $\mu$m, and determines the talc's lamellarity. A highly lamellar macrocrystalline talc has large individual platelets, whereas a microcrystalline compact talc's platelets are much smaller. By delamination of these sandwiches the active surface area of the talc consequently may be significantly enlarged.

Additionally, the MAK ("Maximale Arbeitsplatzkonzentrationswerte gesundheitsgefährdender Stoffe"; maximum workplace concentration of hazardous materials) value for talc (free of asbestos fibres) is of 2 mg/$m^3$, notably higher than that of Kieselguhr, which has an MAK value of 0.3 mg/$m^3$ according to the "Grenzwerte am Arbeitsplatz 2005" as published by SuvaPro, an independent Swiss company focusing on safety concerns in the workplace. This makes it especially suitable for the use with food.

However, materials having a high aspect ratio have the essential drawback that they tend to close filters as a consequence of their platelet-like structure forming a highly tortuous network (where tortuosity is defined as the actual path length a fluid follows through the filtration structure divided by the physical dimension of the filtration medium in the direction of flow) leading to a low permeability.

GB 1 357 607 discloses a method for obtaining germ-free drinking water, wherein water is passed through a carbon membrane comprising activated carbon and a fibrous supporting material, and optionally via a filter auxiliary material for adsorbing colloidal impurities located on the membrane. Particularly important filter auxiliary materials are asbestos fibres and talc, which are added to the natural water and thoroughly mixed therewith. Moreover, the filter auxiliary material preferably contains another constituent that maintains the additional filter layer porous and loose, Kieselguhr being particularly suitable. Again, no indication is given as to the characteristics of this additional constituent, nor even of the characteristics of the auxiliary material. The method described in GB 1 357 607 does not satisfy the need for a simple, cost-efficient filtration system of high efficiency in terms of filtration capacity and permeability, leading to minimal liquid retention, and avoiding the drawbacks using delaminated talc.

US 6,416,671 describes a method for removing organic molecules selected from the group consisting of organic chemical molecules and biological agents, from a liquid waste solution by contacting said liquid waste solution with a solid phase binder and separating the resulting complex from said liquid waste solution to remove the organic molecules from the liquid waste solution. The solid phase binder includes an adsorbent particle or particles attached to or entrapped in a matrix. For example, the adsorbent particle or particles may be attached to a porous glass support such as a porous glass bead. Different adsorbent particles may be used in the solid phase binders of the present invention. Examples of an adsorbent include talc. The document, however does not relate to the specific requirements of beverage filtration. Furthermore, it is mentioned that the adsorbent particles may be attached to or entrapped in a matrix by methods known in the art without specifying these methods, especially with respect to the problems of separation of talc particles from the glass beads due to different density and weight of the materials leading to the clogging of pores by the talc particles when they are first suspended in the liquid to be purified. Thus, with respect to this embodiment, it is only mentioned that the filtering aid is most suitably used in a column.

WO 2006/082323 relates to a powder composition for the filtration of liquid foods, which is characterised in that it comprises at least 65 wt.-% of a phyllosilicate mineral with a BET specific surface area of no more than 40 $m^2/g$, and at least one filtering material. Also, this document, however, does not address the problems of filter clogging, e.g. using materials having a high aspect ratio, which are especially useful for filtration due to its high specific surface area and adsorption capability. To the contrary, WO 2006/082323 explicitly mentions the use of low specific area phyllosilicates, preferably having a particle size of less than 10 $\mu$m for avoiding the clogging of the filter pores.

Looking at the above mentioned documents, there are a number of filtering and flocculating aids known in the art for the purification of liquids, especially liquid foods. However, the materials described in the prior art have a number of drawbacks, e.g. are suspected to be carcinogenic, have an unacceptable uptake of the liquid to be purified, clog the filter pores or have an improvable adsorptivity. Documents suggesting the use of spacers in order to avoid the clogging of pores suffer from separation of the filter or flocculating aid and the spacer due to the difference of density, shape and/or weight, when they are first suspended in the liquid.

Thus, it is an object of the present invention to provide filtering and/or flocculating aids, which overcome the above problems, as well as a method for their preparation, the use of the improved filtering and/or flocculating aids, a filter cake and precoat, overcoming the above problems.

The solution according to the present invention is defined by the features of the independent claims. Preferred embodiments are described in the dependent claims and the following description.

While the use of spacers for avoiding the closing of filters by the adsorbing agent failed due to the separation of the spacer material and the adsorbing agent material, occurring when the composite is dispersed in the liquid medium, it has now been found that this problem can be overcome by a filtering aid and/or flocculating aid for the purification of liquid foods comprising adsorbing agent particles and spacer particles, wherein the spacer particles are intrinsically hydrophobic or hydrophobised, and the adsorbing agent particles are intrinsically hydrophobic or hydrophobised and are associated to the spacer particles forming a composite therewith.

"Associated" according to the present invention is defined as joining together via associative forces, in this case hydrophobic associative forces.

"Composite" according to the present invention is defined as a structure consisting of two or more different components forming a macroscopically continuous material.

"Hydrophobic" or "hydrophobised" according to the present invention means that the adsorbing agent or spacer, as the case may be, are sufficiently hydrophobic or hydrophobised to be associated with one another, but that they are not hydrophobic or hydrophobised to the extent that they remain at the surface of the liquid food to be purified, but that they are capable of being wetted by the liquid under the purification conditions as described below.

This composite according to the invention provides a cardhouse type structure, which ensures good permeability and so high flow capacity characteristics, and at the same time high adsorptivity.

Adsorbing agents according to the present invention have a high aspect ratio in order to ensure good adsorptivity.

It is preferred that the adsorbing agent particles present a high aspect ratio A of from 150 to 300, preferably from 226 to 280, and most preferably from 262 to 275, as determined according to the Hohenberger equation, as given below:

$$A = \frac{1}{2}\left(Os \cdot d_{50} \cdot e^{\left(-\ln^2(d_{84}/d_{50})\right)} \cdot rf - 4\right)$$

where the specific surface area, Os, is given in $m^2/g$ and measured using the BET method as described below, the $d_{50}$ and $d_{84}$ values are measured using Malvern MasterSizer S instrumentation on a sample of material dispersed in 50 to 80 ml of water by adding 10 ml of 0.1 % sodium pyrophosphate, such that the $d_x$ value is the particle size at which x percent of the volume of the particles are smaller than d. The value is given in $\mu$m. "rf" is the filler density in $g/cm^3$ as measured by AccuPyc 1330.

Adsorbing agents suitable for the present invention are talc.

Talcs, which can be used in the present invention are any commercially available talcs of different origins.

In a natural talc-rich ore, talc is always found in association with at least one other mineral, such as olivine, serpentine, chlorite, biotite, pyroxene and amphibole, dolomite and magnesite depending on its origin. Thus, four main ores are distinguished: magnesium carbonate derivative ores, which can be found e.g. in Yellowstone (Montana USA), Respina (Spain), Three Springs (Australia) and Haicheng (China), serpentinite derivative ores such as from Vermont (USA), Quebec and Ontario (Canada) and Sotkamo (Finland), siliceous or silico-aluminous derivative ores, e.g. from the French Pyrenees (France), and magnesium sedimentary deposit derivative ores, which are always found in association with impurities such as quartz, clay, organic materials and iron hydroxides.

For the present invention any of these four talc ore types and combinations thereof can be used, provided that they do not contain harmful components in amounts which would make them unsuitable for the use in liquid foods, or that such components are separated prior to their use. Preferred are magnesium carbonate derivative ores (Australia and China) and serpentinite derivative ores (Finland) or combinations thereof. Also useful in the present invention may be tales from Germany, Florence (Italy), Tyrol (Austria), Shetland (Scotland), Norway, Transvaal (South Africa), the Appalachians, California, and Texas (USA).

The composition and purity of the talcs useful in the present invention were analysed by methods well-known in the art, namely X-ray fluorescence (XRF) (ARL 9400 Sequential XRF) and X-ray diffraction (XRD) (from 5-100° 2theta Bragg diffraction using a Bruker AXS D8 Advanced XRD system with CuK$\alpha$ radiation, automated divergence slits and a linear position-sensitive detector. The tube current and voltage were 50 mA and 35 kV, respectively: the step size was 0.02° 2theta and the counting time 0.5 s · step$^{-1}$).

Preferred for the use in the present invention are talcs having a content of pure talc of> 80 weight-%, more preferably> 90 weight-%, for example> 95 weight-% or > 98 weight-% and up to 100 weight-%.

Any impurities present should be of such a nature and/or present in such a quantity that they are suitable for food contact.

The talc particles according to the present invention are delaminated. An important role hereby plays the sandwich structure of talc, which upon delamination, also known as exfoliation, provides a large active surface area.

The delamination of phyllosilicates such as talc is known for a long time, and is usually carried out by grinding, e.g. by grinding the talc in a ball mill or by a combination of a ball mill and a homogenizer as described in European patent application 07009687.0.

In a preferred embodiment of the present invention, the adsorbing agent material has a specific surface area of more than 40 m$^2$/g, e.g. 45 m$^2$/g as measured using the BET method according to ISO 9277. It is especially preferred that the specific surface area is > 40 m$^2$/g. The specific surface area can be measured with any equipment suitable for determining the specific surface area, e.g. with a TriStar 3000 Surface Area and Porosimetry Analyser (Micromeritics), optionally with a sample preparation system such as the SmartPrep system, a fully automatic sample preparation and degas system (Micromeritics).

The adsorbing agent particles used in the present invention have a d$_{50}$ value of from 0.05 to 5 $\mu$m, preferably from 0.1 to 4 $\mu$m, most preferably from 0.3 to 2 $\mu$m, especially from 0.5 to 1 $\mu$m, e.g. 0.6 $\mu$m as measured using a Sedigraph™ 5100 of Micromeritics Instrument Corporation. The method and the instrument are known to the skilled person and are commonly used to determine grain size of fillers and pigments. The measurement is carried out in an aqueous solution of 0.1 wt% Na$_4$P$_2$O$_7$. The samples are dispersed using a high speed stirrer and supersonics.

Especially useful spacer materials in the present invention have a low aspect ratio.

In a particular selection of embodiments of the invention, the spacer particles feature a low aspect ratio of from l to 50, preferably from 5 to 40, more preferably from 7 to 35, most preferably from 8 to 33, according to the Hohenberger equation given hereabove, wherein the specific surface area, Os, is given in m$^2$/g and measured using the BET method, the d$_{50}$ and d$_{84}$ values are measured using Malvern MasterSizer S instrumentation on a sample of material dispersed in 50 to 80 of water by adding 10 ml of 0.1 % sodium pyrophosphate, such that the d$_x$ value is the particle size at which x percent of the volume of the particles are smaller than d. The value is given in $\mu$m. "rf" is the filler density in g/cm$^3$ as measured by AccuPyc 1330 (Micromeritics).

The spacer may additionally feature an aspect ratio relative to the aspect ratio of the adsorbing agent material of from 0.020 to 0.166, preferably from 0.022 to 0.142, most preferably from 0.026 to 0.127.

Due to its use in liquid foods the spacer is glass. This glass may be natural or may undergo a step of processing, such as in the case of, e.g., perlite.

The glass particles useful in the present invention can be produced from any conventional glass in any conventional way. It may, e.g. be produced from waste glass, such as from conventional beverage bottles by crushing, e.g. in a jaw crusher such as a jaw crusher PULVERISETTE type 01.703 n° 706 available from Fritsch GmbH, Germany, and subsequent dry or wet grinding in a suitable mill such as a ball mill, e.g. dry grinding in an Alpine Labor-Kugelmühle type 1-25 LK using any conventional grinding balls which can be used for grinding glass, e.g. steel balls or steatite grinding balls having suitable sizes which are known to those skilled in the art. For example, a mixture of steatite grinding balls available from Befag Verfahrenstechnik AG having a diameter of 15 mm, 20 mm, and 28 mm can be used in a weight ratio of 12:74:14.

Also useful in the present invention are commercially available glass types such as Recofill® MG-450 glass powder available from Reidt GmbH & Co. KG, Germany.

For the use in liquid foods the spacer should be acid resistant and stable in a pH range of from 3 to 8. Also, it should not release any harmful substances like heavy metals to an extent which exceeds the allowed contents in liquid foods. Also, no substances should be contained in the spacer which would alter the sensory properties of liquid foods. The suitability of spacers with respect to these requirements is easily determined, e.g. by filtering the liquid food using the spacer and analysing the filtrate for harmful substances, e.g. ICP-/RFA-Analyses or analyses all of which are known to the skilled person.

For the use in the present invention, the spacer particles have a $d_{50}$ value of from 1 to 50 $\mu$m, preferably 4 to 30 $\mu$m, most preferably from 8 to 20 $\mu$m, especially 10 to 15 $\mu$m, or 11 to 14 $\mu$m, e.g. 12 $\mu$m as measured by Sedigraph 5100 mentioned above.

In a preferred embodiment, the $d_{50}$ value of the spacer particles is from 1 to 40 times higher than the $d_{50}$ value of the adsorbing agent particles, preferably from 5 to 30 times, and most preferably from 15 to 25 times, e.g. 20 times higher.

Additionally, the spacer material may feature a specific surface area of less than 5 $m^2$/g, and preferably is from 0.1 to 4 $m^2$/g, more preferably from 0.5 to 3 $m^2$/g, most preferably from 0.75 to 2.5 $m^2$/g, especially from 1.5 to 2 $m^2$/g, as measured using the BET method according to ISO 9277. The specific surface area has been measured with a TriStar 3000 Surface Area and Porosimetry Analyser (Micromeritics), with a sample preparation system such as the FlowPrep 060 system, a fully automatic sample preparation and degas system (Micromeritics).

With respect to the weight of the adsorbing agent particles and the spacer particles, it is especially advantageous if adsorbing agent: spacer weight ratio is from 5:95 to 95:5, preferably from 15:85 to 85:15, more preferably from 25:75 to 75:25, and most preferably from 40:60 to 60:40, e.g. 50:50. Especially preferred is a adsorbing agent: spacer weight ratio of 25:75.

The spacer particles and adsorbing agent particles must be hydrophobic as defined above in order to form a composite according to the invention.

The spacer particles are hydrophobised. The hydrophobisation can be carried out by any hydrophobising agents, which are physiologically acceptable, and by any techniques known in the art.

The spacer particles are hydrophobised with a lipophilic agent, which is preferably selected from selected from the group comprising compounds of the formula R-X, wherein R is a hydrocarbon residue having 8 to 24 carbon atoms, preferably selected from alkyl, alkylaryl, arylalkyl, aryl, and X represents a functional group, preferably selected from the group comprising carboxylate and hydroxyl. More preferably, the lipophilic agent of the formula R-X is selected from fatty acids, or fatty alcohols. Especially preferred are fatty acids, such as stearic acid, palmitic acid or mixtures of any of these acids.

Particularly useful for hydrophobising the spacer particles according to the present invention is a mixture of stearic acid and palmitic acid, wherein a relative weight ratio of stearic acid to palmitic acid of from about 1:10 to about 10:1, preferably of from about 1:7 to about 7:1, more preferably of from about 1:5 to about 5:1, particularly of from about 1:3 to about 3:1. A ratio of 1:1 is especially preferred.

As already mentioned above, it is one specific characteristic of the present filtration and/or flocculation aids that they provide for a reasonable liquid permeability, and do not close the pores. Thus, it is preferred that the filtering and/or flocculating aids have a liquid permeability of more than $1 \cdot 10^{-18}$, preferably more than $1 \cdot 10^{-17}$, more preferably more than $1 \cdot 10^{-16}$, even more preferably more than $1 \cdot 10^{-15}$ $m^2$, especially more than $1 \cdot 10^{-14}$ $m^2$, e.g. more than $1 \cdot 10^{-13}$ $m^2$, and particularly more than $1 \cdot 10^{-12}$ $m^2$ determined according to Darcy's law relative to hexadecane under a pressure of between 0.1 and 7 bar according to the method as described in the examples.

Due to the formation of composites of spacer and adsorbing agent it is thus possible to combine materials having different settling properties, be it due to a difference in their densities or due to their shape. Adsorbing agent particles as described above stick to the spacer particles and form an essentially homogeneous filter cake, wherein the term homogeneous relates to a uniform distribution of the different particles in the filter cake.

A further aspect of the present invention is the provision of a method for the preparation of a filtering aid and/or flocculating aid as described above. This method is characterised by the steps of

-   mixing the adsorbing agent and the spacer in an aqueous medium
-   isolating the resulting composite.

The composite is obtained by separating it from the liquid components by, e.g., decanting and/or filtration and/or centrifugation. Optionally the composite is dried subsequently.

In a specific embodiment the adsorbing agent and/or the spacer are hydrophobised before being mixed together.

This hydrophobisation preferably comprises the steps of

-   dissolving the lipophilic agent in a solvent, and, subsequently,
-   mixing the resulting solution with the spacer particles and/or the adsorbing agent particles to be hydrophobised.

Any solvent being capable of dissolving or at least dispersing the lipophilic agent is suitable for the use in the present invention, such as isopropanol, heptane, toluene, or mixtures thereof, Especially preferred is the use of isopropanol.

Furthermore, an especially useful lipophilic agent for the preparation of the filtering aid and/or flocculating aid of the present invention is a mixture of stearic acid and palmitic acid in a weight ratio of from about 1:10 to about 10:1, preferably of from about 1:7 to about 7:1, more preferably of from about 1:5 to about 5:1, particularly of from about 1:3 to about 3:1. A ratio of 1:1 is especially preferred.

The lipophilic agent is preferably employed in a concentration of 0.01 to 2 wt.-%, preferably 0.05 to 1 wt.-%, more preferably 0.1 to 0.5 wt.-% based on the weight of the spacer and/or adsorbing agent particles.

Disclosed is a process for removing impurities from liquid foods comprising a step wherein a filtering and/or flocculating aid according to the invention is implemented.

Such a process may include a number of techniques using adsorbents for the purification of liquids, especially of liquid foods, e.g. centrifugation, decantation and especially any kind of filtration processes.

If the liquid food is to be purified by decantation, the corresponding process can comprise the steps of:

- introducing the filtering aid and/or flocculating aid into the liquid food to be treated,
- flocculating and adsorbing the impurities by the filtering aid and/or flocculating aid
- separating the liquid food from the flocculated or adsorbed impurities together with the filtering aid and/or flocculating aid by decantation.

A further process is the purification by centrifugation. This process can comprise the steps of:

- introducing the filtering aid and/or flocculating aid into the liquid food to be treated,
- flocculating and adsorbing the impurities by the filtering aid and/or flocculating aid,
- introducing the liquid food to be treated into a centrifuge,
- activating said centrifuge in order to separate the flocculated or adsorbed impurities together with the filtering aid and/or flocculating aid from the liquid food to be treated

In this respect any commercially available centrifuges can be used in a process according to the invention, e.g. a centrifuge of the C312 type (IG Instrumentengesellschaft AG).

There are several filtration techniques, such as cake filtration or alluvium filtration, the latter optionally including a precoat.

If the formation of a filter cake by the separated particles takes place during the filtration, this is called "cake filtration". In this case, the filter cake formed on the filter medium, such as a filter paper, takes over the function of separation during the filtration. A special form of cake filtration is the so-called alluvium filtration, where a flocculating and/or filtering aid is added to the liquid to be purified, flocculating the particles to be separated and/or helping to form a filter cake which does the filtration.

It was now found that the filtering and/or flocculating aids according to the invention are especially useful in such filtration processes. Therefore, a particularly preferred embodiment is a process of filtration comprising the steps of:

- introducing the filtering aid and/or flocculating aid into the liquid food to be treated,
- flocculating and/or adsorbing the impurities by and/or onto the filtering aid and/or flocculating aid,
- forming a filter cake of the filtering aid and/or flocculating aid and the impurities,
- passing said liquid to be treated through said cake by gravity and/or by pressure.

The filter cake is optionally formed by sucking the liquid food comprising the filtering aid and/or flocculating aid through a filter medium such as a filter paper, wherein the filter cake is formed on the filter medium adsorbing further impurities as the liquid food passes through the cake.

A further filtration process is the so-called precoat filtration, wherein filter aids are suspended in a liquid, which is not the liquid to be filtered, and are deposited on filter media such as metallic screens inside of a pressurized vessel, or cellulosic sheets in plate to frame filter processes. The screens and/or cellulose do not act as the main filter, but rather act as septum for the filter aids. The precoat of filter aid then serves as a basis for the filter cake which forms on top of the precoat from the particles to be separated and a filtering and/or flocculating aid serving for flocculating the particles or to support the formation of the filter cake, which does the filtration. Also, the precoat can be used alone without the formation of a filter cake above it.

As with filter sheets, the differential pressure build up signals the end of the filtration run. Since the precoat is usually thicker than a filter sheet/pad, precoat filters render longer runs and have a larger dirt-holding capacity. The spent precoat and filter cake is usually flushed out.

It has been found that the filtration process as described above is especially advantageous, if a precoat is formed prior to the formation of the filter cake according to a precoat filtration process, or a pre-alluvium filtration, if the filter cake is formed as described above with respect to the alluvium filtration.

In this embodiment the precoat is first formed by suspending the precoat material in a liquid and collecting it on the filter medium by letting the liquid pass through the filter medium, e.g. a filter paper with a retention of 12 - 25 $\mu$m and a diameter of about 47 mm (No. 589; Schleicher & Schuell AG). Subsequently the liquid food containing the filtering and/or flocculating aid dispersed therein is passed through this precoat, wherein a filter cake of said filtering and/or flocculating aid is formed on top of the precoat.

The precoat may be formed from the filtering aid and/or flocculating aid according to the invention, which may be the same or different from the one which is used for the filter cake. However, the precoat may also be a different material, which is e.g. selected from the group comprising Kieselguhr such as Becogur® 3500 or Becogur® 200 (available from E. Begerow GmbH & Co., Germany) perlite such as Perlite D12 (Knauf Perlite, Germany), undelaminated talc, glass, foam glass, expanded glass such as Liaver® (Liapor, Germany), expanded clay such as Liapor® (Liapor, Germany), kaolinite, mica, vermiculite, sepiolite, cellulose such as Becocel 100 (available from E. Begerow GmbH & Co., Germany) and mixtures thereof.

The materials used as precoat can have a $d_{50}$ value of from 10 to 50 $\mu$m, preferably 12 to 40 $\mu$m, most preferably from 15 to 30 $\mu$m, e.g. of from 20 to 25 $\mu$m as measured by Sedigraph 5100 mentioned above.

The particle size of the precoat particles measured by screening, e.g. with an EasySieve, AS 200 (Retsch GmbH, Germany) should preferably not exceed 100 $\mu$m, it is preferably less than 90, e.g. from 70 to 90 $\mu$m, but also less than 70 $\mu$m, e.g. less than 50 $\mu$m, e.g. 45 to 50 $\mu$m,

The above described processes may be carried out as a batch, semi-batch or continuous process.

The liquid foods, which can be purified by a filtering aid and/or flocculating aid according to the invention are aqueous, such as edible juices or juice concentrates, sugar syrups, wines, beers, ciders, vinegars, liquors, spirits or other such consumption liquids.

In all cases, the invention should be implemented under conditions such that the liquid food does not act to remove any hydrophobisation layer on either the spacer or the adsorbing agent to the extent that the hydrophobic forces between the spacer and the adsorbing agent are destroyed, as is easily within the skills of the skilled man.

The surface tension of the liquid food suitable in the present invention can be greater than 35 mN/m, preferably greater than 45 mN/m, and most preferably greater than 60 mN/m, as measured with a Krüss tensiometer using a du Noüy ring.

In view of the above purification processes, a filter cake comprising a filtering and/or flocculating aid according to the invention is a further aspect of the present invention.

It is then preferred that the filter cake is essentially homogeneous according to SEM and/or SEM/EDS analysis (scanning electron microscopy/energy dispersive X-ray spectroscopy) with respect to a uniform distribution of the adsorbing agent and spacer particle.

The surface tension of the liquid food can be greater than 35 mN/m, more preferably greater than 45 mN/m, and most preferably greater than 60 mN/m, as measured with a Krüss tensiometer using a du Noüy ring.

A last aspect of the invention is the use of an inventive filtering and/or flocculating aid for removing impurities from liquid foods as defined above, wherein the filtering and/or flocculating aid may be advantageously used in such purification processes like a decantation process, a centrifugation process, or a filtration process, especially a surface filtration such as a cake filtration or an alluvium filtration process. Regarding the latter, the filter cake as well as optionally the precoat may be formed from the filtering and/or flocculating aid.

The following figures, examples and tests will illustrate the present invention.

Description of the figures:

Figure 1. shows the particle size distribution of ground white waste glass.

Figure 2 shows an SEM image of ground white waste glass particles.

Figure 3 shows the particle size distribution of MG-450 glass powder.

Figure 4 shows an SEM image of a delaminated talc/hydrophobised glass powder composite.

Figure 5a to c show SEM/EDS images of the upper third, the centre and the lower third of a tablet formed from a delaminated talc/hydrophobised glass powder composite.

Figure 6 shows beer filtration curves of an inventive and a comparative samples built on a Becogur 3500 precoat in terms of the filtration time versus the filtration volume.

Figure 7 shows beer filtration curves of several inventive and comparative samples built on a Perlite D12 precoat in terms of the filtration time versus the filtration volume.

Figure 8 shows the turbidity of beer filtrates treated with several inventive and comparative samples.

## EXAMPLES:

All particle $d_{50}$ values were measured using a Sedigraph™ 5100 of Micromeritics Instrument Corporation. The method and the instrument are known to the skilled person and are commonly used to determine grain size of fillers and pigments. The measurement is carried out in an aqueous solution of 0.1 wt% $Na_4P_2O_7$. The samples are dispersed using a high speed stirrer (supplier: Kinematica AG, Type Polytron PT 3000, 6014 Littau) and supersonics.

## I. Products Tested

### Delaminated talc

The delaminated talc used in the examples featured a $d_{50}$ of about 0.6 $\mu$m measured by SediGraph 5100, a BET specific surface area of 45.7 $m^2$/g and a density of 2.7 $g/cm^3$.
It was produced from talc coming from Finland (Finntalc) having a BET specific surface area of from 1.8 - 2.3 $m^2$/g, a $d_{50}$ value of 13 $\mu$m, and the following chemical composition:

| | |
|---|---|
| MgO | 31 wt.-% |
| SiO2 | 60 wt.-% |
| Al2O3 | 0.5 wt.-% |
| CaO | 0.1 wt.-% |
| FeO | 2.1 wt.-% |

### Hydrophobised glass

### a) White waste glass

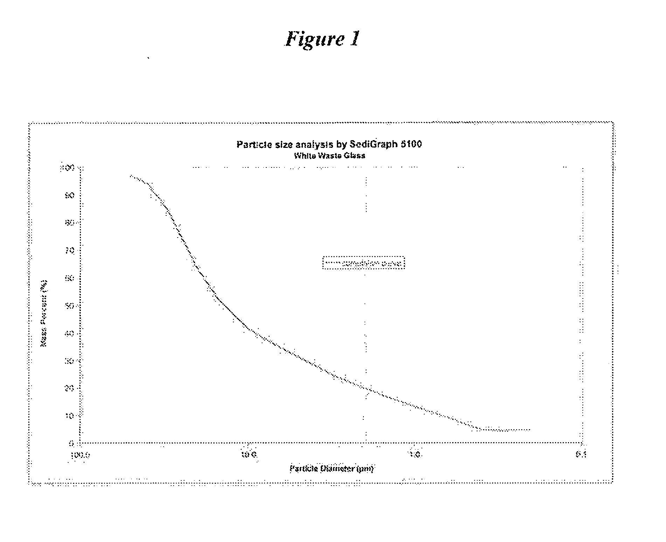

White amorphous silicate from standard white glass bottles was ground in an Alpine, Augsburg, Type 1,25 LK Nr. 157664 grinding mill for 40 h with steel cylpebs (truncated cones with a height of 15 mm, a top diameter of 12 mm, and a bottom diameter of 15 mm), and a weight ratio of glass:cylpebs of approximately 1:11.
Particles having a grain size greater than 50 $\mu$m were then removed using a sieve from Fritsch GmbH with an aperture size of 50 $\mu$m according to DIN-4188 in a sieve shaker AS 200 from Retsch GmbH, Germany. An example of the resulting glass powder presented a particle size distribution curve as measured using a Sedigraph 5100 and is given in figure 1.
This product featured a $d_{50}$ value ranging between 10 and 15 $\mu$m and a density of 2.5 $g/m^2$. Such glass offers the advantage of presenting low quantities of HCl-soluble zinc as measured by ICP-analysis, in accordance with certain food processing requirements.
The results of the **XRF-Analysis** (carried out in x-ray spectrometer of the ARL 9400 type available from Thermo-ARL, Switzerland) of the glass powder are as follows:

| | |
|---|---|
| Si as $SiO_2$: | 73.0 wt.-% |
| Al as $Al_2O_3$: | 1.6 wt.-% |
| Ca as CaO: | 11.1 wt.-% |
| Mg as MgO: | 1.4 wt.-% |
| Na as $Na_2O$: | 12.0 wt.-% |
| K as $K_2O$: | 0.7 wt.-% |
| Fe as $Fe_2O_3$: | 0.3 wt.-% |

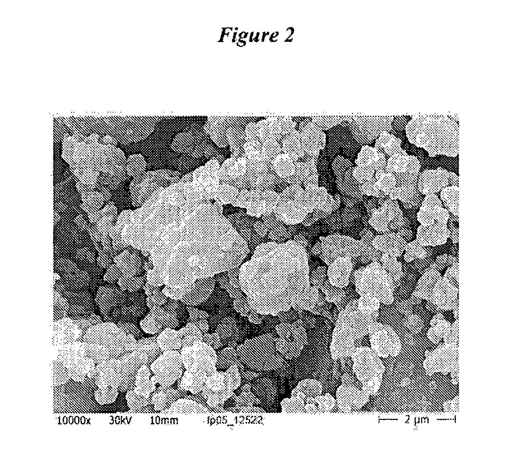

The XRF analysis of the chemical composition of white waste glass represents the typical chemical composition as known from tank- and bottle glass. The resulting particles are shown in figure 2.

500 g of this glass powder was then rendered hydrophobic by mixing it with 0.1 wt.-% (0.5 g) of a 1:1 molar ratio mixture of stearic and palmitic acid, which was previously dissolved in isopropanol at 50° C for 20 minutes.

b) Glass powder Recofill® MG-450

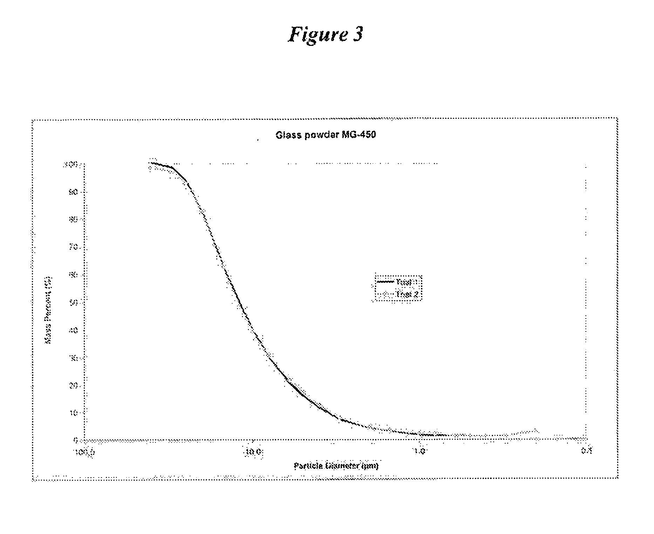

Recofill® MG-450 glass powder is available from Reidt GmbH & Co. KG, Germany.
The particle size distribution of this product was measured twice by Sedigraph 5100 and is shown in figure 3.
The $d_{50}$ values were 12.04 and 12.25 $\mu$m, respectively. The density is 2.5 g/m$^2$. This glass as well offers the advantage of presenting low quantities of HCl-soluble zinc as measured by ICP-analysis, in accordance with certain food processing requirements.
The results of the **XRF-Analysis** (carried out in x-ray spectrometer of the ARL 9400 type available from Thermo-ARL, Switzerland) of the glass powder are as follows:

| | |
|---|---|
| Si as SiO$_2$: | 72.9 wt.-% |
| Al as Al$_2$O$_3$: | 1.7 wt.-% |
| Ca as CaO: | 11.1 wt.-% |
| Mg as MgO: | 1.4 wt.-% |
| Na as Na$_2$O: | 11.6 wt.-% |
| K as K$_2$O: | 0.5 wt.-% |
| Fe as Fe$_2$O$_3$: | 0.3 wt.-% |
| Baas BaO: | 0.1 wt.-% |

The XRF analysis of glass powder MG-450 produced an elemental composition widely corresponding to the white waste glass elemental composition.
500 g of this glass powder was then rendered hydrophobic by mixing it with 0.1 wt.-% (0.5 g) of a 1:1 molar ratio mixture of stearic and palmitic acid, which was previously dissolved in isopropanol at 50° C for 20 minutes.
The confirmation of glass being hydrophobised is given by titration (table 1). The smaller acid value in trial 2 shows that after the glass has been mixed in the stearic-/ palmitic acid solution (aq) there is only a small percentage of acid left in the solution. Thus after filtration and/or centrifugation of the suspension the glass is "coated" with the acid up to 94.5 %.

Table 1:

| Sample | Description | Acid value [mg KOH/g substance] |
|---|---|---|
| 1 | Solution (aq) before glass powder is added | 0.2785 relating to the solution |
| 2 | Solution (aq) after glass powder is added | 0.0153 relating to the solution |

Further Materials:

Finntalc M50 was used as a precoat or comparative sample in liquid food filtration. It is commercially available from MONDO Minerals OY, Finland, and had a $d_{50}$ value of about 18.3 $\mu$m measured by SediGraph 5100 and a BET specific surface area of 1.5 m$^2$g$^{-1}$.
Talc coming from Finland ("Finntalc") has a BET specific surface area of 2.3 m$^2$/g, a $d_{50}$ value of 13 $\mu$m, and the following chemical composition:

| | |
|---|---|
| MgO | 31 wt.-% |
| SiO2 | 60 wt.-% |
| Al$_2$O$_3$ | 0.5 wt.-% |
| CaO | 0.1 wt.-% |
| FeO | 2.1 wt.-% |

As precoat or comparative filter cakes furthermore the following materials were used:

Becogur 200 (Kieselguhr) (available from E. Begerow GmbH & Co., Germany): $d_{50}$ about 12.8 $\mu$m measured by LS

Analysator Coulter.

Becogur 3500 (Kieselguhr) (available from E. Begerow GmbH & Co., Germany): $d_{50}$ about 28 $\mu$m measured by LS Analysator Coulter.

Perlite D12 (available from Knauf Perlite GmbH, Germany): $d_{50}$ about 16 $\mu$m measured by Alpine Luftstrahlsieb 200 LS (wt.-%)

Liaver corresponds to expanded glass "Blähglas" and is available from the company Liapor, Germany. It has been sieved by dry sieve analysis (EasySieve, AS 200 control) to obtain the mentioned particle size distribution and $d_{50}$ value of about 25 $\mu$m to 45 $\mu$m measured by SediGraph 5100.

Becocel 100 (Cellulose): (available from E. Begerow GmbH & Co., Germany): screen oversize: $\leq$ 35 wt.-% :> 32 $\mu$m; $\leq$ 3 wt.-% > 100 $\mu$m; $\leq$ 0.5 wt.-% > 200 $\mu$m (according to supplier's data sheet)

## II. Permeability Tests

The build up of filter cakes was carried out by tablet formation.

## 1. Tablet formation

An aqueous slurry of a delaminated talc with a $d_{50}$ value of 0.6 $\mu$m and hydrophobised white waste glass powder having a $d_{50}$ value of 13.9 $\mu$m in a weight ratio of talc:glass of 25:75 was formed at a solids content of 41.5 wt.-%. This slurry was placed in a tablet forming instrument as described in Ridgway, C.J., Gane, P.A.C., Schoelkopf, J. 2004: "Modified calcium carbonate coatings with rapid absorption and extensive liquid uptake capacity", Colloids and Surfaces A: Physiochem. and Eng. Asp., 2361-3 91-102, such that the height of this slurry in the instrument was of approximately 5 to 5.5 cm, Care was taken to avoid the presence of air bubbles in said slurry. Said slurry was then thoroughly stirred prior to applying a pressure of 15 bar on the slurry in order to form a tablet of 0.9 to 2.5 cm in height and until there remained approximately 0.5 to 1 mm of water on the upper surface of the tablet.

## 2. Tablet Homogeneity Tests

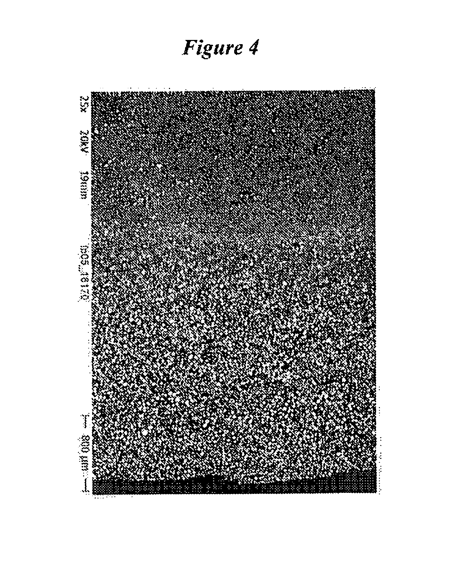

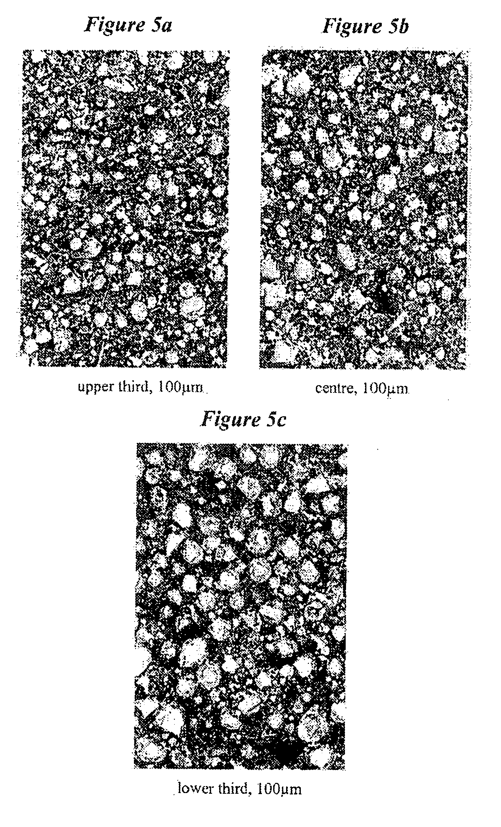

In order to obtain good permeability results, a homogenous distribution of the particles of different materials is required within the filter cake. Several methods were used to control the homogeneity of the tablet such as permeability measurements on the transplanar as well as on the planar orientation of samples and SEM-/EDS-Analyses,
[0115] At first sight in the SEM picture of figure 4 there seems to be a phase separation with delaminated talc above and glass powder underneath. However, figures 5a to c representing SEM/EDS images of the upper third, the centre and the lower third of the tablet clearly show that delaminated talc is stuck with the glass powder (white spots) even towards the bottom. The talc plates do not show any foliated texture but are rather well separated by glass particles as a consequence of the hydrophobising of the glass powder.
Thus the separation that occurred during the tablet build up is rather a separation of the composite fractions due to different settling rates than a phase separation of the composite constituents.

## 3. Tablet Permeability Tests

Permeability measurements were evaluated relative to the passage of hexadecane through the tablet. The tablet was first dried in an oven over 2 days at 40 to 80°C and then polished dry using a Jean Wirtz Phoenix 4000 automated grinding machine to form small blocks which were thereafter embedded in a Buehler EPO-THIN low viscosity epoxy resin mixed with hardener in a weight ratio of 100 parts resin to 39 parts hardener. The embedded tablet was then air dried before being transferred to a permeability device as described in Ridgway, C.J., Schoelkopf. J., Gane, P.A.C. (2003): "A new method for measuring the liquid permeability of coated and uncoated papers and boards", Nordic Pulp and Paper Research Journal, 18(4), 377-381. Hexadecane was then added to the space above the tablet, and an appropriate pressure of between 0.1 and 7 bar was applied to cause liquid to flow through the tablet without causing tablet decomposition. As soon as the first hexadecane drop fell onto the balance, the cumulative mass [g] versus time [s] was recorded until a linear result was obtained. The permeability was then calculated according to Darcy's law as follows:

$$k = \frac{\left(\dfrac{dm/dt}{\rho}\right)\eta \cdot l}{A \cdot \delta P},$$

wherein:

| | |
|---|---|
| k | liquid permeability ($m^2$) |
| dm/dt | flow rate (kg/s) |
| $\eta$ | viscosity of liquid (kg/m/s) |
| l | length of sample (m) |
| $\rho$ | density of liquid ($kg/m^3$) |
| A | cross sectional area of the surface receiving the liquid ($m^2$) |
| $\delta P$ | applied pressure difference ($kg/m/s^2$) |

The viscosity of hexadecane used to calculate liquid permeability was $0.0034\ Ns/m^2$ and the density $773\ kg/m^3$. The applied pressure difference was adjusted between $0.1 \times 10^5$ and $7.0 \times 10^5$ Pa. The liquid permeability was determined twice. The permeability measurements were carried out on the transplanar orientation of the samples. The results are given in table 2.

Table 2:

| Flow rate (kg/s) | Length of sample [m] | Cross sectional area of sample [$m^2$] | Liquid permeability [$m^2$] |
|---|---|---|---|
| $3.09 \times 10^{-7}$ | $1.92 \times 10^{-2}$ | $7.52 \times 10^{-5}$ | $7.69 \times 10^{-16}$ |
| $3.73 \times 10^{-7}$ | $1.92 \times 10^{-2}$ | $7.52 \times 10^{-5}$ | $9.28 \times 10^{-16}$ |

### III. Filtration Tests

The following filtration tests were carried out in order to evaluate the effectivity of several inventive and comparative filter aids in a beer filtration process by determination of beer filtration curves and turbidities. The quality of the beer is tested before (unfiltered) and after (filtrate) the filtration process by determining the turbidity [NTU] (clarification).

#### a) Methods

*Precoat filtration*

The precoat filtration corresponds to a surface filtration, during which a filter aid supports the build-up of the filter cake. For the precoating, 1.8 g (corresponding to a precoating of 1 $kg/m^2$) of a coarse material referred to as the "precoat" is added to 2000 ml tap water and stirred for 10 minutes by using a magnet stirrer. As soon as the filtration of water is started the time [h] is registered for the filtered volumes at 800 ml, 1600 ml and 2000 ml. After the precoat is formed, the beer is brought onto the precoat via a three-way stopcock (step 2, see below). For the filtration tests a simplified filtration equipment according to Raible Niemsch (described in: Kreisz, S., Der Einfluss von Polysacchariden aus Malz, Hefe und Bakterien auf die Filtrierbarkeit von Würze und Bier. - Thesis, Lehrstuhl für Technologie der Brauerei I und Getränketechnologie, Technische Universität München, 2003) was used comprising a feeding bottle to which vacuum is applied, a filtration glass cylinder with a sieve plate and a filter paper (No. 589; Schleicher & Schuell AG) and an inner tube with lateral apertures therein situated on the feeding bottle. A beaker for the precoat filtration (water) and a beaker for the unfiltered material was connected to this equipment by the three-way stopcock.

*Liquid food filtration*

The second step in the filtration process corresponds to beer filtration. For each trial 0.8 g of a finer material at different ratios referred to as the "filter cake" is added to 1000 ml unfiltered beer and stirred for 10 minutes by using a magnet stirrer. The filtration is started when the precoating is finished. During the filtration cycle the time [h] is registered at 200 ml, 400 ml, 600 ml, 800 ml and 1000 ml filtered beer volume.

For each filtration trial a filter paper with a retention of 12 - 25 $\mu$m and a diameter adapted to the diameter of the filtration equipment, in the present case of about 47 mm, is used (No. 589; Schleicher & Schuell AG, the filter paper is not exchanged after the precoat filtration). The applied vacuum during the filtration process is constant at 360 mbar (for the precoating as well as for the beer filtration). The filtration liquid corresponds to unfiltered Zwickel Bier, 5,2 % vol alc. from Müller Bräu, Baden, Switzerland, stored at a temperature of 4° C, which is referred to as the unfiltered, given that at this moment it still contains yeast and haze material.

The following samples tested are given in table 3.

Table 3

| Sample | Material for precoat | | Blend ratio | Material for filter cake | | Blend ratio |
|---|---|---|---|---|---|---|
| 1 (comp) | Becogur 3500 | --- | 100:0 | Becogur 200 | --- | 100:0 |
| 2 | Becogur 3500 | --- | 100:0 | delaminated talc | hydr. glass MG-450 | 25:75 |
| 3 | Becogur 200 | --- | 100:0 | delaminated talc | hydr. glass MG-450 | 25:75 |
| 4 | Perlite D12 | --- | 100:0 | delaminated talc | hydr. glass MG-450 | 25:75 |
| 5 (comp) | Perlite D12 | --- | 100:0 | delaminated talc | Finntalc | 25:75 |
| 6 (comp) | Perlite D12 | --- | 100:0 | hydr. glass MG-450 | --- | 100:0 |
| 7 (comp) | Perlite D12 | --- | 100:0 | Finntalc | --- | 100:0 |
| 8 | Perlite D12 | --- | 100:0 | delaminated talc | hydr. glass MG-450 | 50:50 |
| 9 | Finntalc M50 | --- | 100:0 | delaminated talc | hydr. glass MG-450 | 25:75 |
| 10 | Becocel 100 | --- | 100:0 | delaminated talc | hydr. glass MG-450 | 25:75 |
| 11 (comp) | Finntalc M50 | --- | 100:0 | Finntalc M50 | --- | 100:0 |

In the filtration system an inner tube with lateral apertures has been fixed to prevent the unfiltered hitting the sieve plate as a single jet during the filtration (which would hinder the build up of a uniform precoat and/or filter cake). Thus, the filtration is started as soon as the vacuum reaches 360 mbar by using the three-way stopcock.

## b) Results

### Filtration curves and turbidities

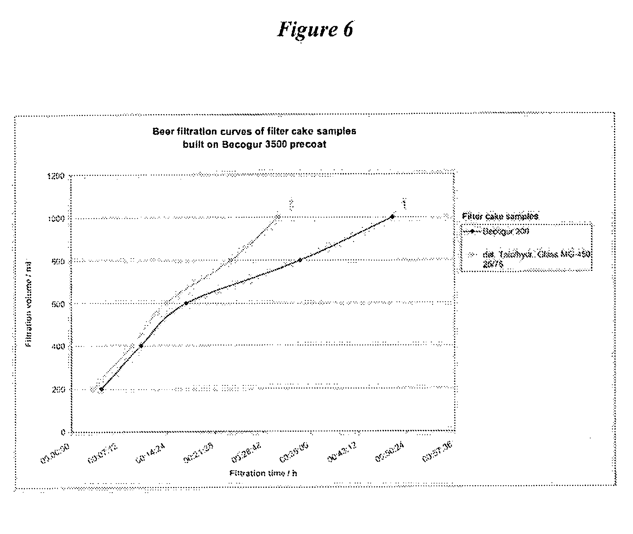

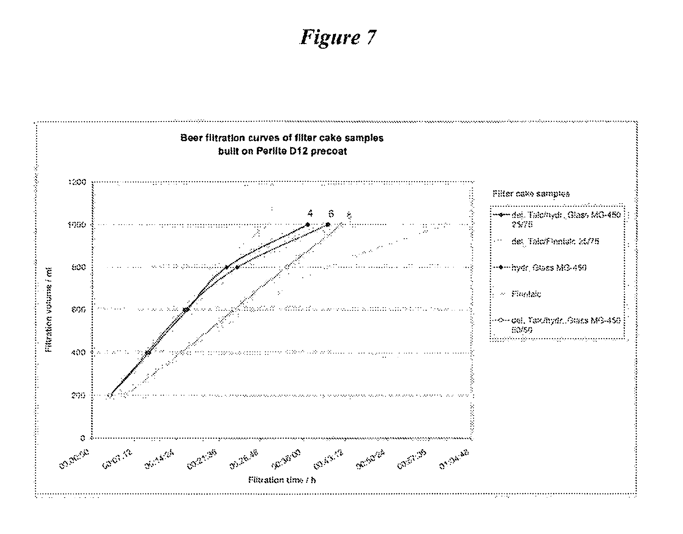

Figures 6 and 7 illustrate beer filtration curves using several precoat samples and filter cake samples built on a precoat respectively, evaluated by determination of filtration volume [ml] against filtration time [h].

As shown in figure 6 two different filter cake samples (1) and (2) built on a coarse Kieselguhr (Becogur 3500) precoat are compared regarding their flow rate capacity. The time [h] required to filter approximately 500 ml beer is widely equal in both trials. Approaching 600 ml filtration volume the flow rate capacity (filtration volume [ml] against filtration time [h]) decreases strongly in trial (1), whereas the coarser structure of delaminated talc combined with glass MG-450 allows for a more effective filtration than the porous structure of Kieselguhr (Becogur 200).

A similar observation is made in figure 7 where the precoat is composed of Perlite D12. The filtration curve of filter cake sample (4) is faster than (8) having a higher talc amount in the filter cake. It can be concluded that the flow rate capacity decreases due to a reduced "cardhouse" structure. The best result of a high flow rate is given by the use of a coarse Finntalc ((7); comparative) as a filter cake. In combination with delaminated talc, however, having a higher adsorptivity, the flow rate decreases strongly ((5); comparative). It may be concluded that an increased amount of delaminated talc and/or a highly increased amount of glass MG-450 ((6); comparative) in a filter cake decreases the flow rate capacity.

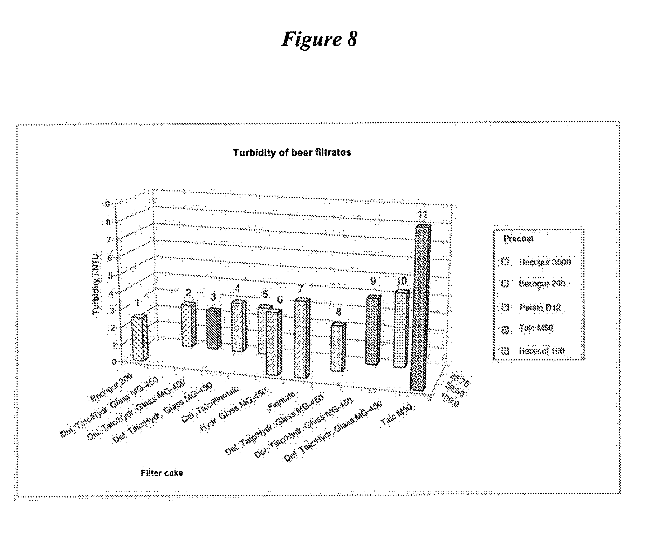

The turbidity was measured with a Turbidimeter (Model 2100P ISO; Hach Company, USA) According to figure 8 the lowest turbidity determined of filtered beer is obtained with sample (3), followed by (2) and (1). With a turbidity lying between 2.29 and 2.75 NTU the filter media of (1), (2), (3), (5) (comparative) and (8) are effective for beer filtration.

Considering the flow rate capacity, (2) according to the invention shows best results, also with respect to comparative example (1). Comparing samples (4) and (8) with comparative examples (6) and (7), the latter had slightly better flow capacity, but the inventive samples have a significantly better performance with respect to the turbidity values. Comparative example (5) has comparable turbidity values, but, as mentioned, a very low flow capacity.

Best results fur both flow rate capacity and turbidity are attained through the use of a filter cake comprised of delaminated talc with a specific surface area > 40 $m^2g^{-1}$ mixed with hydrophobised glass at a 25:75 ratio built upon a coarse Kieselguhr precoat during the filtration process.

**Claims**

1. Filtering aid and/or flocculating aid for the purification of liquid foods comprising an adsorbing agent and a spacer, the spacer particles are intrinsically hydrophobic or hydrophobised, and the adsorbing agent particles are intrinsically hydrophobic or hydrophobised and are associated to the spacer particles forming a composite therewith **characterised in that** the adsorbing agent is talc with a specific surface area of more than 40 $m^2$/g and a $d_{50}$ value from 0.05 to 5 $\mu$m, and the spacer is glass with a $d_{50}$ value of from 1 to 50 $\mu$m and hydrophobised with a lipophilic agent.

2. Filtering aid and/or flocculating aid according to claim 1, **characterised in that** the adsorbing agent particles have a high aspect ratio.

3. Filtering aid and/or flocculating aid according to any one of claims 1 or 2, **characterised in that** the adsorbing agent particles have an aspect ratio of from 150 to 300, preferably from 226 to 280, and most preferably from 262 to 275, as determined according to the Hohenberger equation.

4. Filtering aid and/or flocculating aid according to any of the claims 1 to 3, **characterised in that** the talc has a content of pure talc of > 80 weight-%, more preferably > 90 weight-%, even more preferably > 95 weight-% or > 98 weight-% and most preferably up to 100 weight-%.

5. Filtering aid and/or flocculating aid according to any one of claims 1 to 4, **characterised in that** the adsorbing agent particles have a $d_{50}$ value of from 0.1 to 4 $\mu$m, preferably from 0.3 to 2 $\mu$m, more preferably from 0.5 to 1 $\mu$m.

6. Filtering aid and/or flocculating aid according to any one of claims 1 to 5, **characterised in that** the spacer particles have a low aspect ratio.

7. Filtering aid and/or flocculating aid according to any one of claims 1 to 6, **characterised in that** the spacer particles have an aspect ratio of from 1 to 50, preferably from 5 to 40, more preferably from 7 to 35, most preferably from 8 to 33, according to the Hohenberger equation.

8. Filtering aid and/or flocculating aid according to any one of claims 1 to 7, **characterised in that** the spacer has an aspect ratio relative to die aspect ratio of the adsorbing agent of from 0.020 to 0.166, preferably from 0.022 to 0.142, most preferably from 0.026 to 0.127.

9. Filtering aid and/or flocculating aid according to any one of claims 1 to 8, **characterised in that** the spacer particles have a $d_{50}$ value of from 4 to 30 $\mu$m, preferably from 8 to 20 $\mu$m, more preferably 10 to 15 $\mu$m or 11 to 14 $\mu$m.

10. Filtering aid and/or flocculating aid according to any one of claims 1 to 9, **characterised in that** the $d_{50}$ value of the spacer particles is from 1 to 40 times higher than the $d_{50}$ value of the adsorbing agent particles, preferably from 5 to 30 times, and most preferably from 15 to 25 times.

11. Filtering aid and/or flocculating aid according to any one of claims 1 to 10, **characterised in that** the spacer material has a specific surface area of less than 5 $m^2$/g, preferably is from 0.1 to 4 $m^2$/g, more preferably from 0.5 to 3 $m^2$/g, even more preferably from 0.75 to 2.5 $m^2$/g, and most preferably from 1.5 to 2 $m^2$/g.

12. Filtering aid and/or flocculating aid according to any one of claims 1 to 11, **characterised in that** the adsorbing agent particles and the spacer particles are present in a adsorbing agent: spacer weight ratio of from 5:95 to 95:5, preferably from 15:85 to 85:15, more preferably from 25:75 to 75:25, and most preferably from 40:60 to 60:40, especially preferably of 25:75.

13. Filtering aid and/or flocculating aid according to any one of claims 1 to 12,
**characterised in that** the adsorbing agent particles are hydrophobised with a lipophilic agent.

14. Filtering aid and/or flocculating aid according to any one of claims 1 to 13, **characterised in that** the lipophilic agent is selected from the group comprising compounds of the formula R-X, wherein R is a hydrocarbon residue having 8 to 24 carbon atoms, preferably selected from alkyl, alkylaryl, arylalkyl, aryl, and X represents a functional group, preferably selected from the group comprising carboxylate and hydroxyl.

15. Filtering aid and/or flocculating aid according to any one of claims 1 to 14, **characterised in that** the lipophilic agent is selected from the group comprising fatty acids, stearic acid, palmitic acid and mixtures of any of these acids.

16. Filtering aid and/or flocculating aid according to claim 15, **characterised in that** the lipophilic agent is a mixture of stearic acid and palmitic acid.

17. Filtering aid and/or flocculating aid according to claim 16, **characterised in that** the relative weight ratio of stearic acid to palmitic acid is from about 1:10 to about 10:1, preferably of from about 1:7 to about 7:1, more preferably of from about 1:5 to about 5:1, particularly of from about 1:3 to about 3:1, and especially preferably is 1:1.

18. Filtering aid and/or flocculating aid according to any one of claims 1 to 17, **characterised in that** the filtering aid and/or flocculating aid has a liquid permeability of more than $1 \cdot 10^{-18}$, preferably more than $1 \cdot 10^{-17}$, more preferably more than $1 \cdot 10^{-16}$, even more preferably more than $1 \cdot 10^{-15}$ m$^2$, especially more than $1 \cdot 10^{-14}$ m$^2$, more than $1 \cdot 10^{-13}$ m$^2$, and particularly more than $1 \cdot 10^{-12}$ m$^2$ determined according to Darcy's law relative to hexadecane under a pressure of between 0.1 and 7 bar.

19. Method for the preparation of a filtering aid and/or flocculating aid according to any one of claims 1 to 18, **characterised by** the steps of:

   - mixing the adsorbing agent and the spacer in an aqueous medium; and
   - isolating the resulting composite.

20. Method according to claim 19, **characterised in that** the composite is isolated by decanting and/or filtration and/or centrifugation.

21. Method according to any one of claims 19 or 20, **characterised in that** the adsorbing agent and/or the spacer are hydrophobised before being mixed together.

22. Method according to claim 21, **characterised by** the steps of:

   - dissolving a lipophilic agent in a solvent,
   - mixing the resulting solution with the spacer particles and/or the adsorbing agent particles to be hydrophobised.

23. Method according to claim 22, **characterised in that** the solvent is selected from the group comprising isopropanol, heptane, toluene, or mixtures thereof.

24. Method according to any one of claims 22 or 23, **characterised in that** the solvent is isopropanol.

25. Method according to any one of claims 19 to 24, **characterised in that** the lipophilic agent is a mixture of stearic acid and palmitic acid in a weight ratio of from about 1:10 to about 10: 1, preferably of from about 1:7 to about 7:1, more preferably of from about 1:5 to about 5:1, particularly of from about 1:3 to about 3:1, and especially preferably 1:1..

26. Method according to any one of claims 19 to 25, **characterised in that** the lipophilic agent is used in a concentration of 0.01 to 2 wt.-%, preferably 0.05 to 1 wt.-%, more preferably 0.1 to 0.5 wt.-% based on the weight of the spacer and/or adsorbing agent particles.

27. Use of a filtering and/or flocculating aid according to any one of claims 1 to 19 for removing impurities from liquid foods.

28. Use according to claim 27, **characterised in that** the liquid food to be treated is selected from the group comprising aqueous liquid foods, edible juices, juice concentrates, sugar syrups, wines, beers, ciders, vinegars, liquors, and spirits.

**29.** Use according to claim 28, **characterised in that** the surface tension of the liquid food is greater than 35 mN/m, preferably greater than 45 mN/m, and most preferably greater than 60 mN/m, as measured with a Krüss tensiometer using a du Noüy ring.

**30.** Use according to any one of claims 27 to 29, **characterised in that** the filtering and/or flocculating aid is used in a decantation process.

**31.** Use according to any one of claims 27 to 29, **characterised in that** the filtering and/or flocculating aid is used in a centrifugation process.

**32.** Use according to any one of claims 27 to 29, **characterised in that** the filtering and/or flocculating aid is used in a filtration process.

**33.** Use according to claim 32, **characterised in that** the filtration process is an alluvium filtration.

**34.** Use according to any one of claims 32 or 33, **characterised in that** a filter cake is formed from the filtering and/or flocculating aid.

**35.** Use according to any one of claims 32 to 34, **characterised in that** a precoat is formed from the filtering and/or flocculating aid.

**36.** Filter cake comprising a filtering and/or flocculating aid according to any of claims 1 to 19.

**Patentansprüche**

**1.** Filterhilfe und/oder Ausflockungshilfsmittel für die Reinigung von flüssigen Nahrungsmitteln, umfassend ein Adsorptionsmittel und einen Abstandshalter, wobei die Abstandshalter-Teilchen von sich aus hydrophob oder hydrophobisiert sind und die Adsorptionsmittel-Teilchen von sich aus hydrophob oder hydrophobisiert sind und mit den Abstandshalter-Teilchen assoziiert sind unter Bildung eines Verbundmaterials damit, **dadurch gekennzeichnet, dass** das Adsorptionsmittel Talk mit einer spezifischen Oberfläche von mehr als 40 m$^2$/g und einem d$_{50}$-Wert von 0,05 bis 5 $\mu$m ist und der Abstandshalter Glas mit einem d$_{50}$-Wert von 1 bis 50 $\mu$m und mit einem lipophilen Mittel hydrophobisiert ist.

**2.** Filterhilfe und/oder Ausflockungshilfsmittel nach Anspruch 1, **dadurch gekennzeichnet, dass** die Adsorptionsmittel-Teilchen ein hohes Höhe-Breite-Verhältnis aufweisen.

**3.** Filterhilfe und/oder Ausflockungshilfsmittel nach einem der Ansprüche 1 oder 2, **dadurch gekennzeichnet, dass** die Adsorptionsmittel-Teilchen ein Höhe-Breite-Verhältnis von 150 bis 300, vorzugsweise von 226 bis 280 und am meisten bevorzugt von 262 bis 275, wie gemäß der Hohenberger-Gleichung bestimmt, aufweisen.

**4.** Filterhilfe und/oder Ausflockungshilfsmittel nach einem der Ansprüche 1 bis 3, **dadurch gekennzeichnet, dass** der Talk einen Gehalt an reinem Talk von > 80 Gew.-%, mehr bevorzugt > 90 Gew.-%, sogar noch mehr bevorzugt > 95 Gew.-% oder > 98 Gew.-% und am meisten bevorzugt bis zu 100 Gew.-% aufweist.

**5.** Filterhilfe und/oder Ausflockungshilfsmittel nach einem der Ansprüche 1 bis 4, **dadurch gekennzeichnet, dass** die Adsorptionsmittel-Teilchen einen d$_{50}$-Wert von 0,1 bis 4 $\mu$m, vorzugsweise von 0,3 bis 2 $\mu$m, mehr bevorzugt von 0,5 bis 1 $\mu$m aufweisen.

**6.** Filterhilfe und/oder Ausflockungshilfsmittel nach einem der Ansprüche 1 bis 5, **dadurch gekennzeichnet, dass** die Abstandshalter-Teilchen ein niedriges Höhe-Breite-Verhältnis aufweisen.

**7.** Filterhilfe und/oder Ausflockungshilfsmittel nach einem der Ansprüche 1 bis 6, **dadurch gekennzeichnet, dass** die Abstandshalter-Teilchen ein Höhe-Breite-Verhältnis gemäß der Hohenberger-Gleichung von 1 bis 50, vorzugsweise von 5 bis 40, mehr bevorzugt von 7 bis 35, am meisten bevorzugt von 8 bis 33 aufweisen.

**8.** Filterhilfe und/oder Ausflockungshilfsmittel nach einem der Ansprüche 1 bis 7, **dadurch gekennzeichnet, dass** der Abstandshalter ein Höhe-Breite-Verhältnis bezogen auf das Matrizen-Höhe-Breite-Verhältnis des Adsorptionsmittels von 0,020 bis 0,166, vorzugsweise von 0,022 bis 0,142, am meisten bevorzugt von 0,026 bis 0,127 aufweist.

9.  Filterhilfe und/oder Ausflockungshilfsmittel nach einem der Ansprüche 1 bis 8, **dadurch gekennzeichnet, dass** die Abstandshalter-Teilchen einen $d_{50}$-Wert von 4 bis 30 $\mu$m, vorzugsweise von 8 bis 20 $\mu$m, mehr bevorzugt 10 bis 15 $\mu$m oder 11 bis 14 $\mu$m aufweisen.

10. Filterhilfe und/oder Ausflockungshilfsmittel nach einem der Ansprüche 1 bis 9, **dadurch gekennzeichnet, dass** der $d_{50}$-Wert der Abstandshalter-Teilchen 1- bis 40-fach höher als der $d_{50}$-Wert der Adsorptionsmittel-Teilchen ist, vorzugsweise 5- bis 30-fach und am meisten bevorzugt 15- bis 25-fach.

11. Filterhilfe und/oder Ausflockungshilfsmittel nach einem der Ansprüche 1 bis 10, **dadurch gekennzeichnet, dass** das Abstandshalter-Material eine spezifische Oberfläche unter 5 $m^2$/g aufweist, vorzugsweise 0,1 bis 4 $m^2$/g, mehr bevorzugt 0,5 bis 3 $m^2$/g, sogar noch mehr bevorzugt 0,75 bis 2,5 $m^2$/g und am meisten bevorzugt 1,5 bis 2 $m^2$/g ist.

12. Filterhilfe und/oder Ausflockungshilfsmittel nach einem der Ansprüche 1 bis 11, **dadurch gekennzeichnet, dass** die Adsorptionsmittel-Teilchen und die Abstandshalter-Teilchen in einem Adsorptionsmittel:Abstandshalter-Gewichtsverhältnis von 5:95 bis 95:5, vorzugsweise von 15:85 bis 85:15, mehr bevorzugt von 25:75 bis 75:25 und am meisten bevorzugt von 40:60 bis 60:40, insbesondere bevorzugt von 25:75 vorhanden sind.

13. Filterhilfe und/oder Ausflockungshilfsmittel nach einem der Ansprüche 1 bis 12, **dadurch gekennzeichnet, dass** die Adsorptionsmittel-Teilchen mit einem lipophilen Mittel hydrophobisiert sind.

14. Filterhilfe und/oder Ausflockungshilfsmittel nach einem der Ansprüche 1 bis 13, **dadurch gekennzeichnet, dass** das lipophile Mittel ausgewählt ist aus der Gruppe umfassend Verbindungen der Formel R-X, worin R ein Kohlenwasserstoffrest mit 8 bis 24 Kohlenstoffatomen, vorzugsweise ausgewählt aus Alkyl, Alkylaryl, Arylalkyl, Aryl, ist und X für eine funktionelle Gruppe, vorzugsweise ausgewählt aus der Carboxylat und Hydroxyl umfassenden Gruppe, steht.

15. Filterhilfe und/oder Ausflockungshilfsmittel nach einem der Ansprüche 1 bis 14, **dadurch gekennzeichnet, dass** das lipophile Mittel aus der Gruppe umfassend Fettsäuren, Stearinsäure, Palmitinsäure und Mischungen von jeglichen dieser Säuren ausgewählt ist.

16. Filterhilfe und/oder Ausflockungshilfsmittel nach Anspruch 15, **dadurch gekennzeichnet, dass** das lipophile Mittel eine Mischung von Stearinsäure und Palmitinsäure ist.

17. Filterhilfe und/oder Ausflockungshilfsmittel nach Anspruch 16, **dadurch gekennzeichnet, dass** das relative Gewichtsverhältnis von Stearinsäure zu Palmitinsäure etwa 1:10 bis etwa 10:1, vorzugsweise etwa 1:7 bis etwa 7:1, mehr bevorzugt etwa 1:5 bis etwa 5:1, insbesondere etwa 1:3 bis etwa 3:1 beträgt und besonders bevorzugt 1:1 ist.

18. Filterhilfe und/oder Ausflockungshilfsmittel nach einem der Ansprüche 1 bis 17, **dadurch gekennzeichnet, dass** die Filterhilfe und/oder das Ausflockungshilfsmittel eine Flüssigkeitspermeabilität von mehr als 1 $10^{-18}$, vorzugsweise mehr als 1 $10^{-17}$, mehr bevorzugt mehr als 1 $10^{-16}$, sogar noch mehr bevorzugt mehr als 1 $10^{-15}$ $m^2$, insbesondere mehr als 1 $10^{-14}$ $m^2$, mehr als 1 $10^{-13}$ $m^2$ und insbesondere mehr als 1 $10^{-12}$ $m^2$, bestimmt gemäß dem Darcy-Gesetz bezogen auf Hexadecan unter einem Druck zwischen 0,1 und 7 bar, aufweist.

19. Verfahren zur Herstellung einer Filterhilfe und/oder eines Ausflockungshilfsmittels nach einem der Ansprüche 1 bis 18, das **gekennzeichnet ist durch** die Schritte:

    - Mischen des Adsorptionsmittels und des Abstandshalters in einem wässrigen Medium; und
    - Isolieren des resultierenden Verbundmaterials.

20. Verfahren nach Anspruch 19, **dadurch gekennzeichnet, dass** das Verbundmaterial durch Dekantieren und/oder Filtration und/oder Zentrifugation isoliert wird.

21. Verfahren nach einem der Ansprüche 19 oder 20, **dadurch gekennzeichnet, dass** das Adsorptionsmittel und/oder der Abstandshalter hydrophobisiert werden, bevor sie miteinander vermischt werden.

22. Verfahren nach Anspruch 21, das **gekennzeichnet ist durch** die Schritte:

- Lösen eines lipophilen Mittels in einem Lösungsmittel,
- Mischen der resultierenden Lösung mit den Abstandshalter-Teilchen und/oder den Adsorptionsmittel-Teilchen, die hydrophobisiert werden sollen.

**23.** Verfahren nach Anspruch 22, **dadurch gekennzeichnet, dass** das Lösungsmittel aus der Gruppe, umfassend Isopropanol, Heptan, Toluol oder Mischungen davon, ausgewählt wird.

**24.** Verfahren nach einem der Ansprüche 22 oder 23, **dadurch gekennzeichnet, dass** das Lösungsmittel Isopropanol ist.

**25.** Verfahren nach einem der Ansprüche 19 bis 24, **dadurch gekennzeichnet, dass** das lipophile Mittel eine Mischung von Stearinsäure und Palmitinsäure in einem Gewichtsverhältnis von etwa 1:10 bis etwa 10:1, vorzugsweise von etwa 1:7 bis etwa 7:1, mehr bevorzugt von etwa 1:5 bis etwa 5:1, insbesondere von etwa 1:3 bis etwa 3:1 und besonders bevorzugt 1:1 ist.

**26.** Verfahren nach einem der Ansprüche 19 bis 25, **dadurch gekennzeichnet, dass** das lipophile Mittel in einer Konzentration von 0,01 bis 2 Gew.-%, vorzugsweise 0,05 bis 1 Gew.-%, mehr bevorzugt 0,1 bis 0,5 Gew.-% basierend auf dem Gewicht der Abstandshalter- und/oder Adsorptionsmittel-Teilchen verwendet wird.

**27.** Verwendung einer Filterhilfe und/oder eines Ausflockungshilfsmittels nach einem der Ansprüche 1 bis 19 zum Entfernen von Verunreinigungen aus flüssigen Nahrungsmitteln.

**28.** Verwendung nach Anspruch 27, **dadurch gekennzeichnet, dass** das flüssige Nahrungsmittel, das behandelt werden soll, aus der Gruppe, umfassend wässrige flüssige Nahrungsmittel, verzehrbare Säfte, Saftkonzentrate, Zuckersirupe, Weine, Biere, Apfelmoste, Essige, alkoholische Getränke und Spirituosen, ausgewählt ist.

**29.** Verwendung nach Anspruch 28, **dadurch gekennzeichnet, dass** die Oberflächenspannung des flüssigen Nahrungsmittels größer als 35 mN/m, vorzugsweise größer als 45 mN/m und am meisten bevorzugt größer als 60 mN/m, wie mit einem Krüss-Tensiometer unter Verwendung eines Du Noüy-Rings gemessen, ist.

**30.** Verwendung nach einem der Ansprüche 27 bis 29, **dadurch gekennzeichnet, dass** die Filterhilfe und/oder das Ausflockungshilfsmittel in einem Dekantationsverfahren verwendet wird.

**31.** Verwendung nach einem der Ansprüche 27 bis 29, **dadurch gekennzeichnet, dass** die Filterhilfe und/oder das Ausflockungshilfsmittel in einem Zentrifugationsverfahren verwendet wird.

**32.** Verwendung nach einem der Ansprüche 27 bis 29, **dadurch gekennzeichnet, dass** die Filterhilfe und/oder das Ausflockungshilfsmittel in einem Filtrationsverfahren verwendet wird.

**33.** Verwendung nach Anspruch 32, **dadurch gekennzeichnet, dass** das Filtrationsverfahren eine Alluvium-Filtration ist.

**34.** Verwendung nach einem der Ansprüche 32 oder 33, **dadurch gekennzeichnet, dass** ein Filterkuchen aus der Filterhilfe und/oder dem Ausflockungshilfsmittel gebildet wird.

**35.** Verwendung nach einem der Ansprüche 32 bis 34, **dadurch gekennzeichnet, dass** eine Precoat-Schicht aus der Filterhilfe und/oder dem Ausflockungshilfsmittel gebildet wird.

**36.** Filterkuchen, welcher eine Filterhilfe und/oder ein Ausflockungshilfsmittel nach einem der Ansprüche 1 bis 19 umfasst.

**Revendications**

**1.** Agent d'aide à la filtration et/ou agent d'aide à la floculation pour la purification d'aliments liquides comprenant un agent adsorbant et un espaceur, les particules d'espaceur sont intrinsèquement hydrophobes ou rendues hydrophobes, et les particules d'agent adsorbant sont intrinsèquement hydrophobes ou rendues hydrophobes et sont associées aux particules d'espaceur pour former un composite avec celles-ci, **caractérisé en ce que** l'agent adsorbant est du talc présentant une zone surfacique supérieure à 40 m$^2$/g et une valeur de $d_{50}$ de 0,05 $\mu$m à 5 $\mu$m, et l'espaceur est du verre présentant une valeur de $d_{50}$ de 1 $\mu$m à 50 $\mu$m et est rendu hydrophobe avec un agent lipophile.

2. Agent d'aide à la filtration et/ou agent d'aide à la floculation selon la revendication 1, **caractérisés en ce que** les particules d'agent adsorbant présentent un rapport d'aspect élevé.

3. Agent d'aide à la filtration et/ou agent d'aide à la floculation selon la revendication 1 ou 2, **caractérisés en ce que** les particules d'agent adsorbant présentent un rapport d'aspect de 150 à 300, de préférence de 226 à 280, et de manière encore plus préférée de 262 à 275, tel que déterminé selon l'équation de Hohenberger.

4. Agent d'aide à la filtration et/ou agent d'aide à la floculation selon l'une quelconque des revendications 1 à 3, **caractérisés en ce que** le talc présente une teneur en talc pur supérieure à 80 % en poids, de préférence supérieure à 90 % en poids, de manière davantage préférée supérieure à 95 % en poids ou supérieure à 98 % en poids et de manière encore plus préférée allant jusqu'à 100 % en poids.

5. Agent d'aide à la filtration et/ou agent d'aide à la floculation selon l'une quelconque des revendications 1 à 4, **caractérisés en ce que** les particules d'agent adsorbant présentent une valeur de $d_{50}$ de 0,1 $\mu$m à 4 $\mu$m, de préférence de 0,3 $\mu$m à 2 $\mu$m, et de manière davantage préférée de 0,5 $\mu$m à 1 $\mu$m.

6. Agent d'aide à la filtration et/ou agent d'aide à la floculation selon l'une quelconque des revendications 1 à 5, **caractérisés en ce que** les particules d'espaceur présentent un rapport d'aspect bas.

7. Agent d'aide à la filtration et/ou agent d'aide à la floculation selon l'une quelconque des revendications 1 à 6, **caractérisés en ce que** les particules d'espaceur présentent un rapport d'aspect de 1 à 50, de préférence de 5 à 40, de manière davantage préférée de 7 à 35, et de manière encore plus préférée de 8 à 33, selon l'équation de Hohenberger.

8. Agent d'aide à la filtration et/ou agent d'aide à la floculation selon l'une quelconque des revendications 1 à 7, **caractérisés en ce que** l'espaceur présente un rapport d'aspect par rapport au rapport d'aspect de matrice de l'agent adsorbant de 0,020 à 0,166, de préférence de 0,022 à 0,142, et de manière encore plus préférée de 0,026 à 0,127.

9. Agent d'aide à la filtration et/ou agent d'aide à la floculation selon l'une quelconque des revendications 1 à 8, **caractérisés en ce que** les particules d'espaceur présentent une valeur de $d_{50}$ de 4 $\mu$m à 30 $\mu$m, de préférence de 8 $\mu$m à 20 $\mu$m, et de manière encore plus préférée de 10 $\mu$m à 15 $\mu$m ou de 11 $\mu$m à 14 $\mu$m.

10. Agent d'aide à la filtration et/ou agent d'aide à la floculation selon l'une quelconque des revendications 1 à 9, **caractérisés en ce que** la valeur de $d_{50}$ des particules d'espaceur est 1 à 40 fois plus élevée que la valeur de $d_{50}$ des particules d'agent adsorbant, de préférence de 5 à 30 fois et de manière encore plus préférée de 15 à 25 fois.

11. Agent d'aide à la filtration et/ou agent d'aide à la floculation selon l'une quelconque des revendications 1 à 10, **caractérisés en ce que** le matériau d'espaceur présente une zone surfacique spécifique inférieure à 5 m$^2$/g, de préférence de 0,1 m$^2$/g à 4 m$^2$/g, de manière davantage préférée de 0,5 m$^2$/g à 3 m$^2$/g, ou mieux de 0,75 m$^2$/g à 2,5 m$^2$/g et de manière encore plus préférée de 1,5 m$^2$/g à 2 m$^2$/g.

12. Agent d'aide à la filtration et/ou agent d'aide à la floculation selon l'une quelconque des revendications 1 à 11, **caractérisés en ce que** les particules d'agent adsorbant et les particules d'espaceur sont présentes selon un rapport pondéral agent adsorbant/espaceur de 5/95 à 95/5, de préférence 15/85 à 85/15, de manière davantage préférée de 25/75 à 75/25 et de manière encore plus préférée de 40/60 à 60/40, tout particulièrement préférée de 25/75.

13. Agent d'aide à la filtration et/ou agent d'aide à la floculation selon l'une quelconque des revendications 1 à 12, **caractérisés en ce que** les particules d'agent adsorbant sont rendues hydrophobes avec un agent lipophile.

14. Agent d'aide à la filtration et/ou agent d'aide à la floculation selon l'une quelconque des revendications 1 à 13, **caractérisés en ce que** l'agent lipophile est choisi dans le groupe comprenant les composés de formule R-X, dans laquelle R est un résidu hydrocarboné contenant 8 à 24 atomes de carbone, choisi en particulier parmi un alkyle, un alkylaryle, un arylalkyle, un aryle, et X représente un groupe fonctionnel choisi de préférence dans le groupe comprenant un carboxylate et un hydroxyle.

15. Agent d'aide à la filtration et/ou agent d'aide à la floculation selon l'une quelconque des revendications 1 à 14, **caractérisés en ce que** l'agent lipophile est choisi dans le groupe comprenant les acides gras, l'acide stéarique, l'acide palmitique et les mélanges de l'un quelconque de ces acides.

16. Agent d'aide à la filtration et/ou agent d'aide à la floculation selon la revendication 15, **caractérisés en ce que** l'agent lipophile est un mélange d'acide stéarique et d'acide palmitique.

17. Agent d'aide à la filtration et/ou agent d'aide à la floculation selon la revendication 16, **caractérisés en ce que** le rapport pondéral relatif entre l'acide stéarique et l'acide palmitique est d'environ 1/10 à environ 10/1, de préférence d'environ 1/7 à environ 7/1, de manière davantage préférée d'environ 1/5 à environ 5/1, en particulier d'environ 1/3 à environ 3/1, de manière tout particulièrement préférée il est de 1/1.

18. Agent d'aide à la filtration et/ou agent d'aide à la floculation selon l'une quelconque des revendications 1 à 17, **caractérisés en ce que** l'agent d'aide à la filtration et/ou l'agent d'aide à la floculation présentent une perméabilité au liquide de plus de $1\,10^{-18}$, de préférence de plus de $1\,10^{-17}$, de manière davantage préférée de plus de $1\,10^{-16}$, ou mieux de plus de $1\,10^{-15}$ m$^2$, tout particulièrement de plus de $1\,10^{-14}$ m$^2$, de plus de $1\,10^{-13}$ m$^2$, et en particulier de plus de $1\,10^{-12}$ m$^2$, déterminée selon la loi de Darcy par rapport à l'hexadécane sous une pression de 0,1 bar à 7 bar.

19. Procédé de préparation d'un agent d'aide à la filtration et/ou d'un agent d'aide à la floculation selon l'une quelconque des revendications 1 à 18, **caractérisé par** les étapes suivantes :

   - mélange de l'agent adsorbant et de l'espaceur dans un milieu aqueux ; et
   - isolement du composite en résultant.

20. Procédé selon la revendication 19, **caractérisé en ce que** le composite est isolé par décantation et/ou filtration et/ou centrifugation.

21. Procédé selon la revendication 19 ou 20, **caractérisé en ce que** l'agent adsorbant et/ou l'espaceur sont rendus hydrophobes avant d'être mélangés ensemble.

22. Procédé selon la revendication 21,
**caractérisé par** les étapes suivantes :

   - dissolution d'un agent lipophile dans un solvant,
   - mélange de la solution en résultant avec les particules d'espaceur et/ou les particules d'agent adsorbant à rendre hydrophobes.

23. Procédé selon la revendication 22, **caractérisé en ce que** le solvant est choisi dans le groupe comprenant l'isopropanol, l'heptane, le toluène ou leurs mélanges.

24. Procédé selon la revendication 22 ou 23, **caractérisé en ce que** le solvant est l'isopropanol.

25. Procédé selon l'une quelconque des revendications 19 à 24, **caractérisé en ce que** l'agent lipophile est un mélange d'acide stéarique et d'acide palmitique selon un rapport pondéral d'environ 1/10 à environ 10/1, de préférence d'environ 1/7 à environ 7/1, de manière davantage préférée d'environ 1/5 à environ 5/1, en particulier d'environ 1/3 à environ 3/1, et de manière tout particulièrement préférée de 1/1.

26. Procédé selon l'une quelconque des revendications 19 à 25, **caractérisé en ce que** l'agent lipophile est utilisé à une concentration de 0,01 % à 2 % en poids, de préférence de 0,05 % à 1 % en poids, de manière davantage préférée de 0,1 % à 0,5 % en poids sur la base du poids des particules d'espaceur et/ou d'agent adsorbant.

27. Utilisation d'un agent d'aide à la filtration et/ou d'aide à la floculation selon l'une quelconque des revendications 1 à 19, pour éliminer les impuretés d'aliments liquides.

28. Utilisation selon la revendication 27, **caractérisée en ce que** le produit alimentaire liquide à traiter est choisi dans le groupe comprenant les aliments liquides aqueux, les jus comestibles, les concentrés de jus, les sirops de sucre, les vins, les bières, les cidres, les vinaigres, les liqueurs et les spiritueux.

29. Utilisation selon la revendication 28, **caractérisée en ce que** la tension superficielle de l'aliment liquide est supérieure à 35 mN/m, de préférence supérieure à 45 mN/m et de manière encore plus préférée supérieure à 60 mN/m, telle que mesurée avec un tensiomètre Krüss au moyen d'un anneau de du Noüy.

30. Utilisation selon l'une quelconque des revendications 27 à 29, **caractérisée en ce que** l'agent d'aide à la filtration et/ou d'aide à la floculation est utilisé dans un procédé de décantation.

31. Utilisation selon l'une quelconque des revendications 27 à 29, **caractérisée en ce que** l'agent d'aide à la filtration et/ou d'aide à la floculation est utilisé dans un procédé de centrifugation.

32. Utilisation selon l'une quelconque des revendications 27 à 29, **caractérisée en ce que** l'agent d'aide à la filtration et/ou d'aide à la floculation est utilisé dans un procédé de filtration.

33. Utilisation selon la revendication 32, **caractérisée en ce que** le procédé de filtration est une filtration d'alluvions.

34. Utilisation selon la revendication 32 ou 33, **caractérisée en ce qu'**un gâteau de filtration est formé à partir de l'agent d'aide à la filtration et/ou d'aide à la floculation.

35. Utilisation selon l'une quelconque des revendications 32 à 34, **caractérisée en ce qu'**un prérevêtement est formé à partir de l'agent d'aide à la filtration et/ou d'aide à la floculation.

36. Gâteau de filtration comprenant un agent d'aide à la filtration et/ou d'aide à la floculation selon l'une quelconque des revendications 1 à 19.

*Figure 1*

*Figure 2*

*Figure 3*

*Figure 4*

*Figure 5a*

*Figure 5b*

upper third, 100µm

centre, 100µm

*Figure 5c*

lower third, 100µm

## Figure 6

## Figure 7

*Figure 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03024567 A
- FR 2689903
- EP 0255696 A
- GB 1357607 A
- US 6416671 B
- WO 2006082323 A
- EP 07009687 A

**Non-patent literature cited in the description**

- **RIDGWAY, C.J. ; GANE, P.A.C. ; SCHOELKOPF, J.** Modified calcium carbonate coatings with rapid absorption and extensive liquid uptake capacity. *Colloids and Surfaces A: Physiochem. and Eng. Asp.,* 2004, vol. 2361-3, 91-102
- **RIDGWAY, C.J. ; SCHOELKOPF. J. ; GANE, P.A.C.** A new method for measuring the liquid permeability of coated and uncoated papers and boards. *Nordic Pulp and Paper Research Journal,* 2003, vol. 18 (4), 377-381
- **KREISZ, S.** Der Einfluss von Polysacchariden aus Malz, Hefe und Bakterien auf die Filtrierbarkeit von Würze und Bier. *Thesis, Lehrstuhl für Technologie der Brauerei I und Getränketechnologie,* 2003